# EUROPEAN PATENT APPLICATION

(11) **EP 3 885 391 A1**
(43) Date of publication of application: **29.09.2021**
(21) Application number: 20164980.3
(22) Date of filing: 23.03.2020
(51) Int. Cl.: C08G 65/44, C08L 71/12

(54) **MULTIFUNCTIONAL POLY(ARYLENE ETHER) RESINS, METHOD OF MAKING AND ARTICLES OBTAINED THEREFROM**

(71) Applicant: SHPP Global Technologies B.V., 4612 PX Bergen op Zoom (NL)
(72) Inventor: Tarkin-Tas, Eylem, New York, NY 12158 (US); Banach, Timothy Edward, New York, NY 12158 (US); Tas, Huseyin, New York, NY 2158 (US)
(74) Representative: Balder IP Law, S.L.

(57) **Abstract**

A poly(arylene ether) copolymer wherein the poly(arylene ether) copolymer is a product of oxidative copolymerization of monomers comprising a first monohydric phenol; a second monohydric phenol; a multifunctional phenol or polyphenol comprising a novolac, a dicyclopentadiene phenol novolac, a trisphenol, or a combination thereof; and optionally, at least one terminal functional group.

## Description

### BACKGROUND

This disclosure relates to poly(arylene ether)s, and in particular to multifunctional poly(arylene ether)s, poly(arylene ether) compositions, methods of manufacture, and uses thereof.

Thermosetting resins are materials that cure to form very hard plastics. These materials that can be used in a wide variety of consumer and industrial products. For example, thermosets are used in protective coatings, adhesives, electronic laminates (such as those used in the fabrication of computer circuit boards), flooring, and paving applications, glass fiber-reinforced pipes, and automotive parts (including leaf springs, pumps, and electrical components). Poly(arylene ether) copolymers generally have good dielectric properties. Because of their broad use, particularly in electronic applications, such as laminates for printed circuit boards, it is desirable to provide thermoset compositions including poly(arylene ether) copolymers with a lower melt viscosity while maintaining or improving the dielectric constant, dissipation factor, and heat resistance.

There accordingly remains a need in the art for poly(arylene ether) copolymers that have lower melt viscosity. It would be a further advantage if the poly(arylene ether) copolymers had improved dielectric constant, dissipation factor, and heat resistance.

### BRIEF DESCRIPTION

The above-described and other deficiencies of the art are met by a poly(arylene ether) copolymer wherein the poly(arylene ether) copolymer is a product of oxidative copolymerization of monomers comprising a first monohydric phenol; a second monohydric phenol; a multifunctional phenol or polyphenol comprising a novolac, a dicyclopentadiene phenol novolac, a trisphenol, or a combination thereof; and optionally, at least one terminal functional group.

In another aspect, a method of manufacture comprises combining the above-described components to form a poly(arylene ether) copolymer.

In yet another aspect, an article comprises the above-described poly(arylene ether) copolymer.

In still another aspect, a method of manufacture of an article comprises molding, extruding, or shaping the above-described poly(arylene ether) copolymer into an article.

The above described and other features are exemplified by the following drawings, detailed description, examples, and claims.

### DETAILED DESCRIPTION

Poly(arylene ether)s have been known to improve the dielectric performance of thermosetting materials for electronics applications. Demand for big data storage and high speed data transmission at higher frequencies has increased the requirement for use of high density and multilayer printed circuit boards in electronics applications. Increase in the complexity of the boards, reduction in design space along with introduction of radio units has increased the demand for high performance materials. In other words, there is a need for materials with a lower dielectric constant, a lower dissipation factor, and higher heat resistance. In addition to the performance requirements, a resin composition that has a better flow or lower viscosity for easier processing is desirable.

The inventors hereof have discovered poly(arylene ether) copolymers, wherein the poly(arylene ether) copolymers are a product of oxidative copolymerization of monomers comprising a first monohydric phenol; a second monohydric phenol; a multifunctional phenol comprising a novolac, a dicyclopentadiene phenol novolac, a trisphenol, or a combination thereof; and optionally, at least one terminal functional group. Advantageously, the poly(arylene ether) copolymers can have an improved dielectric constant, a lower dissipation factor, higher heat resistance, and improved processability.

The individual components of the poly(arylene ether) copolymers are discussed in more detail below.

The poly(arylene ether) copolymers include repeating units derived from a first monohydric phenol. The repeating units derived from the first monohydric phenol comprises the formula (1) 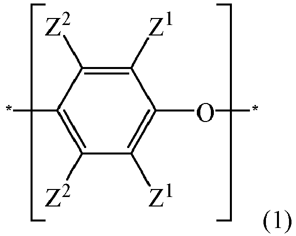 wherein each occurrence of Z¹ independently comprises halogen, unsubstituted or substituted C₁₋₁₅ primary or secondary hydrocarbyl, C₁₋₁₅ hydrocarbylthio, C₁₋₁₅ hydrocarbyloxy, or C₂₋C₁₅ halohydrocarbyloxy wherein at least two carbon atoms separate the halogen and oxygen atoms; and each occurrence of Z² independently comprises hydrogen, halogen, unsubstituted or substituted C₁₋₁₅ primary or secondary hydrocarbyl, C₁₋₁₅ hydrocarbylthio, C₁₋₁₅ hydrocarbyloxy, or C₂₋₁₅ halohydrocarbyloxy wherein at least two carbon atoms separate the halogen and oxygen atoms; wherein at least one of Z¹, Z², or a combination thereof is unsubstituted or substituted C₁₋₁₅ primary or secondary hydrocarbyl; each occurrence of Z¹ are not simultaneously methyl, and and each occurrence of Z² are not simultaneously methyl.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, Z¹ can be a di-n-butylaminomethyl group formed by reaction of a terminal 3,5-dimethyl-1,4-phenyl group with the di-n-butylamine component of an oxidative polymerization catalyst.

The introduction of aliphatic substituents, thus increasing the carbon and hydrogen content of the poly(arylene ether) copolymers can improve dielectric performance. The first monohydric phenol can have increased carbon and hydrogen content by incorporating aliphatic substituents in the Z¹ and/or Z² positions. In some aspects, each occurrence of Z¹ independently comprises halogen, substituted or unsubstituted C₁₋₆alkyl, C₂₋₆alkenyl, C₂₋₆alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆₋₁₂aryl, or (C₆₋₁₂aryl)C₁₋₃alkyl; each occurrence of Z² comprises hydrogen, halogen, substituted or unsubstituted C₁₋₆alkyl, C₂₋₆alkenyl, C₂₋₆alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆₋₁₂aryl, or (C₆₋₁₂aryl)C₁₋₃alkyl; at least one of Z¹, Z², or a combination thereof of the first monohydric phenol is a substituted or unsubstituted C₁₋₆alkyl, C₂₋₆alkenyl, C₂₋₆alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆₋₁₂aryl, or (C₆₋₁₂aryl)C₁₋₃alkyl; wherein each occurrence of Z¹ are not simultaneously methyl, and each occurrence of Z² are not simultaneously methyl.

In a preferred aspect, each occurrence of Z¹ independently comprises halogen, substituted or unsubstituted C₁₋₃alkyl, C₂₋₄alkenyl, C₂₋₄alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆aryl, or (C₆aryl)C₁₋₃alkyl; each occurrence of Z² independently comprises hydrogen, halogen, substituted or unsubstituted C₁₋₃alkyl, C₂₋₄alkenyl, C₂₋₄alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆aryl, or (C₆aryl)C₁₋₃alkyl; wherein at least one of Z¹, Z², or a combination thereof of the first monohydric phenol is a substituted or unsubstituted C₁₋₃alkyl, C₂₋₄alkenyl, C₂₋₄alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆aryl, or (C₆aryl)C₁₋₃alkyl; wherein each occurrence of Z¹ are not simultaneously methyl, and each occurrence of Z² are not simultaneously methyl.

In another preferred aspect of the first monohydric phenol, each occurrence of Z¹ independently comprises methyl, ethyl, allyl, a substituted or unsubstituted phenyl, C₁₋₃alkyl(adamantyl), C₁₋₃alkyl(bicyclo[2.2.1]heptenyl), or C₁₋₃alkyl(C₃₋₁₂cycloalkenyl); each occurrence of Z² independently comprises hydrogen, halogen, methyl, ethyl, allyl, a substituted or unsubstituted phenyl, C₁₋₃alkyl(adamantyl), C₁₋₃alkyl(bicyclo[2.2.1]heptenyl), or C₁₋₃alkyl(C₃₋₁₂cycloalkenyl); wherein each occurrence of Z¹ are not simultaneously methyl, and each occurrence of Z² are not simultaneously methyl. In the immediately preceding aspect, the substituted or unsubstituted C₁₋₃alkyl(C₃₋₁₂cycloalkenyl) group is different from the substituted or unsubstituted C₁₋₃alkyl(bicyclo[2.2.1]heptenyl) group.

In certain aspects, the first monohydric phenol can include 2-cyclohexyl-6-methyl phenol, 2-phenyl-6-methyl phenol, 2-allyl-6-methyl phenol, 2-CH₂(C₆₋₁₂cycloalkenyl)-6-methyl phenol, 2-CH₂(C₆₋₁₂cycloalkenyl)-3,6-dimethyl phenol, 3-CH₂(C₆₋₁₂cycloalkenyl)-2,6-dimethyl phenol, 2-phenyl-6-CH₂(C₆₋₁₂cycloalkenyl) phenol, 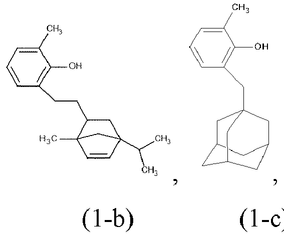 or a combination thereof.

The poly(arylene ether) copolymers include repeating units derived from a second monohydric phenol. The second monohydric phenol comprises 2,6-dimethyl phenol, 2,3,6-trimethyl phenol, 2-phenyl-6-methyl phenol, 2-allyl-6-methyl phenol, or a combination thereof.

In some aspects, the poly(arylene ether) copolymer comprises a poly(arylene ether) copolymer of formula (2) 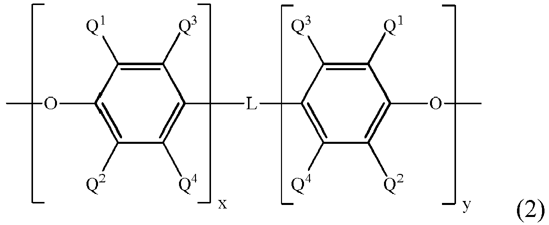 wherein each occurrence of Q¹ and Q² independently comprises halogen, unsubstituted or substituted C₁-₁₅ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; each occurrence of Q³ and Q⁴ independently comprises hydrogen, halogen, unsubstituted or substituted C₁-C₁₅ primary or secondary hydrocarbyl, C₁-C₁₂ hydrocarbylthio, C₁₋₁₂ hydrocarbyloxy, or C₂₋₁₂ halohydrocarbyloxy wherein at least two carbon atoms separate the halogen and oxygen atoms; x and y have an average value, and each independently comprise 0-30, or 0-20, preferably 0-15, still more preferably 0-10, even more preferably 0-8, provided that the sum of x and y is at least 2, preferably at least 3, more preferably at least 4; wherein at least one of Q¹ to Q⁴, or a combination thereof is an unsubstituted or substituted C₁-₁₅ primary or secondary hydrocarbyl; and Q¹ and Q², Q³ and Q⁴, or a combination thereof are not simultaneously methyl.

In some aspects, each occurrence of Q¹ and Q² independently comprises a substituted or unsubstituted C₁₋₃alkyl, C₂₋₄alkenyl, C₂₋₄alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆aryl, or (C₆aryl)C₁₋₃alkyl; each occurrence of Q³ and Q⁴ independently comprises hydrogen, halogen, substituted or unsubstituted C₁₋₃alkyl, C₂₋₄alkenyl, C₂₋₄alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆aryl, or (C₆aryl)C₁₋₃alkyl; wherein at least one of Q¹ to Q⁴, or a combination thereof is C₁₋₃alkyl, C₂₋₄alkenyl, C₂₋₄alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆aryl, or (C₆aryl)C₁₋₃alkyl; and wherein Q¹ and Q², Q³ and Q⁴, or a combination thereof are not simultaneously methyl.

In some aspects, each occurrence of Q¹ and Q² independently comprises methyl, ethyl, allyl, a substituted or unsubstituted phenyl, C₁₋₃alkyl(adamantyl), C₁₋₃alkyl(C₃₋₁₂cycloalkenyl), or a substituted or unsubstituted C₁₋₃alkyl(bicyclo[2.2.1]heptenyl); each occurrence of Q³ and Q⁴ independently comprises hydrogen, halogen, methyl, ethyl, allyl, a substituted or unsubstituted phenyl, C₁₋₃alkyl(adamantyl), C₁₋₃alkyl(C₃₋₁₂cycloalkenyl), or a C₁₋₃alkyl(bicyclo[2.2.1]heptenyl); wherein at least one of Q¹ to Q⁴ is methyl, ethyl, allyl, a substituted or unsubstituted phenyl, C₁₋₃alkyl(adamantyl), C₁₋₃alkyl(C₃₋₁₂cycloalkenyl), or C₁₋₃alkyl(bicyclo[2.2.1]heptenyl); and wherein Q¹ and Q², Q³ and Q⁴, or a combination thereof are not simultaneously methyl. In the immediately preceding aspect, the substituted or unsubstituted C₁₋₃alkyl(C₃₋₁₂cycloalkenyl) group is different from the substituted or unsubstituted C₁₋₃alkyl(bicyclo[2.2.1]heptenyl) group.

In certain aspects, the copolymer of Formula (2) is derived from 2-cyclohexyl-6-methyl phenol, 2-phenyl-6-methyl phenol, 2-allyl-6-methyl phenol, 2-CH₂(C₆₋₁₂cycloalkenyl)-6-methyl phenol, 2-CH₂(C₆₋₁₂cycloalkenyl)-3,6-dimethyl phenol, 3-CH₂(C₆₋₁₂cycloalkenyl)-2,6-dimethyl phenol, 2-phenyl-6-CH₂(C₆₋₁₂cycloalkenyl) phenol, Compound (1-a), Compound (1-b), or a combination thereof.

Further in formula (2), L is of formula (3) or formula (4) as described below. L can be of formula (3) 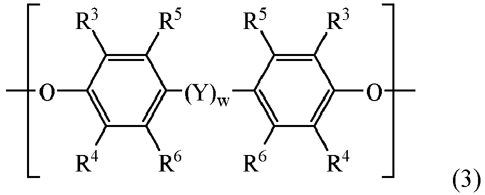 wherein each occurrence of R³, R⁴, R⁵, and R⁶ independently comprises hydrogen, halogen, unsubstituted or substituted C₁₋₁₂ primary or secondary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; w is 0 or 1; and Y is 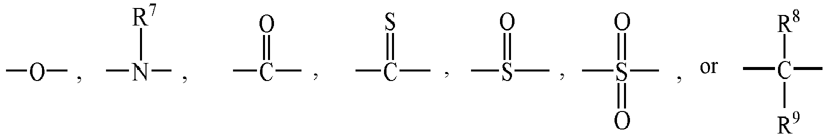 wherein each occurrence of R⁷ independently comprises hydrogen or C₁₋₁₂ hydrocarbyl, each occurrence of R⁸ and R⁹ independently comprises hydrogen, C₁₋₁₂ hydrocarbyl, or R⁸ and R⁹ together form a C₄₋₁₂ cyclohydrocarbylene with the carbon atom. In an aspect in formula (3), each of R³, R⁴, R⁵, and R⁶ independently comprises hydrogen, halogen, unsubstituted or substituted C₁₋₆ primary or secondary hydrocarbyl; and w is 0 or 1. In some aspects, each of R³ to R⁶ independently comprises unsubstituted or substituted C₁₋₁₅ primary or secondary hydrocarbyl; and R³ and R⁴, R⁵ and R⁶, or a combination thereof are not simultaneously methyl. In some aspects, each of R³ to R⁶ independently comprises substituted or unsubstituted hydrogen, halogen, C₁₋₃alkyl, C₂₋₄alkenyl, C₂₋₄alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆aryl, or (C₆aryl)C₁₋₃alkyl, wherein R³ and R⁴, R⁵ and R⁶, or a combination thereof are not simultaneously methyl. In other aspects, each of R³ to R⁶ independently comprises methyl, ethyl, allyl, a substituted or unsubstituted phenyl, C₁₋₃alkyl(adamantyl), C₁₋₃alkyl(bicyclo[2.2.1]heptenyl), or C₁₋₃alkyl(C₃₋₁₂cycloalkenyl), wherein R³ and R⁴, R⁵ and R⁶, or a combination thereof are not simultaneously methyl. In the immediately preceding aspect, the substituted or unsubstituted C₁₋₃alkyl(C₃₋₁₂cycloalkenyl) group is different from the substituted or unsubstituted C₁₋₃alkyl(bicyclo[2.2.1]heptenyl) group. In certain aspects, the copolymer of Formula (2) is derived from 2-cyclohexyl-6-methyl phenol, 2-phenyl-6-methyl phenol, 2-allyl-6-methyl phenol, 2-CH₂(C₆₋₁₂cycloalkenyl)-6-methyl phenol, 2-CH₂(C₆₋₁₂cycloalkenyl)-3,6-dimethyl phenol, 3-CH₂(C₆₋₁₂cycloalkenyl)-2,6-dimethyl phenol, 2-phenyl-6-CH₂(C₆₋₁₂cycloalkenyl) phenol, Compound (1-a), Compound (1-b), or a combination thereof.

In another aspect, L in formula (3) is of formula (4) 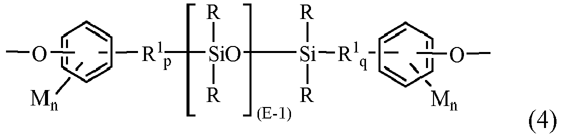 wherein E is 6-100, or 11-80, or 11-60; and each occurrence of R independently comprises an unsubstituted or substituted C₁₋₁₃ alkyl, C₁₋₁₃ alkoxy, C₃₋₆ cycloalkyl, C₃₋₆ cycloalkoxy, C₆₋₁₄ aryl, C₆₋₁₀ aryloxy, C₇₋₁₃ arylalkylene, or C₇₋₁₃ alkylarylene. The foregoing groups can be fully or partially halogenated with fluorine, chlorine, bromine, or iodine, or a combination thereof. Further in formula (4), each p and q are independently 0 or 1; R¹ is a divalent C₂₋₈ aliphatic group, and each occurrence of M independently comprises halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n independently comprises 0, 1, 2, 3, or 4. Preferably in formula 4, E is 5-60; each occurrence of R independently comprises C₁₋₆ alkyl, C₃₋₆ cycloalkyl, or C₆₋₁₄ aryl, more preferably methyl; p and q are each 1; R¹ is a divalent C₂₋₈ aliphatic group, M is halogen, cyano, C₁₋₄ alkyl, C₁₋₄ alkoxy, C₆₋₁₀ aryl, C₇₋₁₂ aralkyl, or C₇₋₁₂ alkylaryl, more preferably methyl or methoxy; and each n independently comprises 0, 1, or 2.

In an aspect, the poly(arylene ether) copolymer comprises a poly(arylene ether) copolymer of formula (2a) 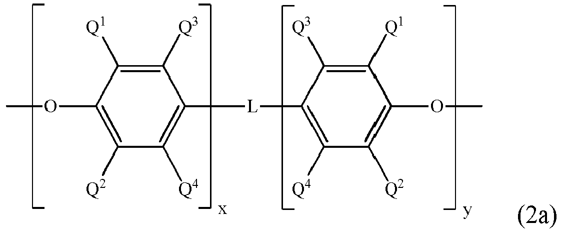 wherein Q¹, Q², Q³, Q⁴, L, x and y are as defined in formulas (2), (3), or (4). In an aspect, Q¹, Q², Q³, or Q⁴ is hydrogen, methyl, cyclohexyl, phenyl, di-n-butylaminomethyl, or morpholinomethyl, or a combination thereof.

In some aspects the poly(arylene ether) copolymer comprises a poly(arylene ether) copolymer of formula (2b) 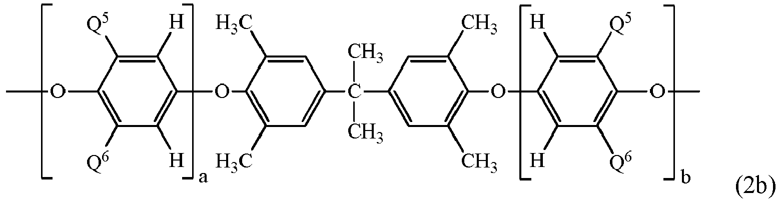 wherein each occurrence of Q⁵ and Q⁶ independently comprises methyl, ethyl, allyl, a substituted or unsubstituted cyclohexyl, phenyl, -CH₂-adamantyl, or -(CH₂)₂-bicyclo[2.2.1]heptenyl, di-n-butylaminomethyl, or morpholinomethyl; and each occurrence of a and b independently comprises 0-20, with the proviso that the sum of a and b is at least 2. Preferably in formula (2b), each occurrence of Q⁵ and Q⁶ independently comprises methyl, cyclohexyl, allyl, phenyl, -CH₂-adamantyl, -(CH₂)₂-bicyclo[2.2.1]heptenyl, di-n-butylaminomethyl, or morpholinomethyl.

The poly(arylene ether) copolymers of formula (2) can be prepared by derivatization of a hydroxyl-terminated poly(arylene ether) copolymer prepared by oxidative polymerization of at least one monohydric phenol, optionally in combination with at least one dihydric or polyhydric phenol, in the presence of a polymerization catalyst comprising a catalyst metal ion and a catalyst amine ligand, oxygen, and solvent. The polymerization catalyst can be prepared *in situ* by mixing the catalyst metal ion and the catalyst amine ligand. The solvent can be benzene, toluene, xylenes, mesitylene, chlorobenzene, dichlorobenzenes, chloroform, or combinations thereof. In some aspects, the solvent comprises toluene. The molecular oxygen can be provided, for example, in a purified form or as air.

In some aspects, the poly(arylene ether) copolymer is essentially free of incorporated diphenoquinone residues. In the context, "essentially free" means that the less than 1 weight percent (wt%) of poly(arylene ether) copolymer molecules comprise the residue of a diphenoquinone. As described in US 3306874 to Hay, synthesis of poly(arylene ether) copolymer by oxidative polymerization of monohydric phenol yields not only the desired poly(arylene ether) copolymer but also a diphenoquinone as side product. For example, when the monohydric phenol is 2,6-dimethylphenol, 3,3',5,5'-tetramethyldiphenoquinone is generated. Typically, the diphenoquinone is "reequilibrated" into the poly(arylene ether) copolymer (i.e., the diphenoquinone is incorporated into the poly(arylene ether) copolymer structure) by heating the polymerization reaction mixture to yield a poly(arylene ether) copolymer comprising terminal or internal diphenoquinone residues. For example, when a poly(arylene ether) copolymer is prepared by oxidative polymerization of 2,6-dimethylphenol to yield poly(2,6-dimethyl-1,4-phenylene ether) and 3,3',5,5'-tetramethyldiphenoquinone, reequilibration of the reaction mixture can produce a poly(arylene ether) copolymer with terminal and internal residues of incorporated diphenoquinone. However, such reequilibration reduces the molecular weight of the poly(arylene ether) copolymer. Accordingly, when a higher molecular weight poly(arylene ether) copolymer is desired, it can be desirable to separate the diphenoquinone from the poly(arylene ether) copolymer rather than reequilibrating the diphenoquinone into the poly(arylene ether) copolymer chains. Such a separation can be achieved, for example, by precipitation of the poly(arylene ether) copolymer in a solvent or solvent mixture in which the poly(arylene ether) copolymer is insoluble and the diphenoquinone is soluble. For example, when a poly(arylene ether) copolymer is prepared by oxidative polymerization of 2,6-dimethylphenol in toluene to yield a toluene solution comprising poly(2,6-dimethyl-1,4-phenylene ether) and 3,3',5,5'-tetramethyldiphenoquinone, a poly(2,6-dimethyl-1,4-phenylene ether) essentially free of diphenoquinone can be obtained by mixing 1 volume of the toluene solution with 1-4 volumes of methanol or a methanol/water mixture. Alternatively, the amount of diphenoquinone side-product generated during oxidative polymerization can be minimized (e.g., by initiating oxidative polymerization in the presence of less than 10 wt% of the monohydric phenol and adding at least 95 wt% of the monohydric phenol over the course of at least 50 minutes), and/or the reequilibration of the diphenoquinone into the poly(arylene ether) copolymer chain can be minimized (e.g., by isolating the poly(arylene ether) copolymer no more than 200 minutes after termination of oxidative polymerization). These approaches are described in International Patent Application Publication No. WO2009/104107 A1 of Delsman et al. In an alternative approach using the temperature-dependent solubility of diphenoquinone in toluene, a toluene solution containing diphenoquinone and poly(arylene ether) copolymer can be adjusted to a temperature of 25°C, at which diphenoquinone is poorly soluble but the poly(arylene ether) copolymer is soluble, and the insoluble diphenoquinone can be removed by solid-liquid separation (e.g., filtration).

In some aspects, the poly(arylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone by-product is present.

In addition to the first monohydric phenol and the second monohydric phenol, the poly(arylene ether) copolymer includes a multifunctional phenol or polyphenol. The multifunctional phenol or polyphenol, when incorporated into the poly(arylene ether) copolymer, provides a pendant group that includes a hydroxyl group that is available for branching to provide multi-arm structures. Not wishing to be bound by theory, incorporation of multifunctional phenols or polyphenols into the poly(arylene ether) copolymer can improve the processability by lowering the melt viscosity. The multifunctional phenol or polyphenol includes a novolac, a dicyclopentadiene phenol novolac, a trisphenol, or a combination thereof. The multifunctional phenol or polyphenol can include a novolac having the formula (8-1), formula (8-2), or a combination thereof

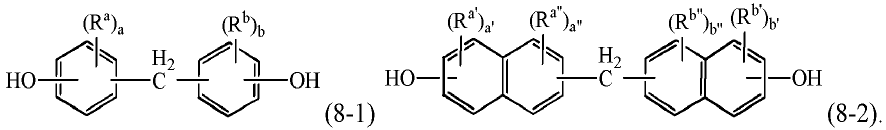

In formula (8-1), R^{a} and R^{b} can each independently comprise a halogen, a hydroxyl, C₁₋₁₂ alkoxy, or C₁₋₁₂ alkyl, and b can each independently be an integer of 0 to 4. In some aspects, R^{a}, and R^{b} each independently comprise a halogen, a hydroxyl, C₁₋₆ alkoxy, or C₁₋₆ alkyl, and a and b each independently comprise integers of 0 to 2. In some aspects, R^{a} and R^{b} each independently comprise a halogen, a hydroxyl, C₁₋₃ alkoxy, or C₁₋₃ alkyl, and a and b each independently comprise integers of 0 to 2. In some aspects, R^{a} and R^{b} each independently comprise a halogen, a hydroxyl, or methyl, and a and b each independently comprise integers of 0 to 2. In certain aspects, and R^{a} and R^{b} are both methyl, and a and b are both 1. In some aspects, R^{a} and R^{b} are both hydroxyl, and a and b are both 2.

In formula (8-2), R^{a'}, R^{a"}, R^{b'}, and R^{b"} each independently comprise a halogen, a hydroxyl, C₁₋₁₂ alkoxy, or C₁₋₁₂ alkyl, and a', a", b', and b" can each independently be an integer of 0 to 3. In some aspects, R^{a'}, R^{a"}, R^{b'}, and R^{b"} each independently comprise a halogen, a hydroxyl, C₁₋₆ alkoxy, or C₁₋₆ alkyl, and a', a", b', and b" each independently comprise integers of 0 to 2. In some aspects, R^{a'}, R^{a"}, R^{b'}, and R^{b"} each independently comprise a halogen, a hydroxyl, C₁₋₃ alkoxy, or C₁₋₃ alkyl, and a', a", b', and b" each independently comprise integers of 0 to 2. In some aspects, R^{a'}, R^{a"}, R^{b'}, and R^{b"} each independently comprise a halogen, a hydroxyl, or methyl, and a', a", b', and b" each independently comprise integers of 0 to 2. In certain aspects, and R^{a'} and R^{b'} are both methyl, and a' and b' are both 1, and a" and b" are both 0. In some aspects, R^{a"} and R^{b'} are both hydroxyl, a' and b' are both 2, and a" and b" are both 0. In some aspects, a', b', a", and b" are all 0.

In a preferred aspect, the novolac includes phenol novolac, o-cresol novolac, naphthol novolac, resorcinol novolac, m-cresol novolac, or a combination thereof.

The multifunctional phenol or polyphenol can include a dicyclopentadiene phenol novolac comprising the formula (9) 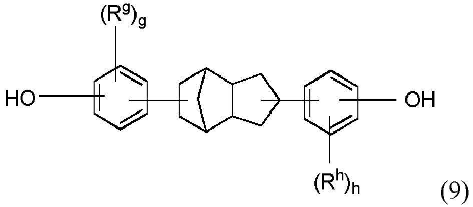 wherein R^{g} and R^{h} each independently comprise a halogen, a hydroxyl, C₁₋₁₂ alkoxy, or C₁₋₁₂ alkyl, and g and h each independently comprise integers of 0 to 4. In some aspects, R^{g} and R^{h} each independently comprise a halogen, a hydroxyl, C₁₋₆ alkoxy, or C₁₋₆ alkyl, and g and h each independently comprise integers of 0 to 2. In some aspects, R^{g} and R^{h} each independently comprise a halogen, a hydroxyl, C₁₋₃ alkoxy, or C₁₋₃ alkyl, and g and h each independently comprise integers of 1 to 2. In some aspects, g and h are 0. In some aspects, R^{g} and R^{h} are each methyl, ethyl, a hydroxyl, or isopropyl, and g and h each independently comprise integers of 1 to 2. In some aspects, R^{g} and R^{h} are both hydroxyl, and a and b are both 2.

The multifunctional phenol or polyphenol can include a trisphenol comprising the formula (10) 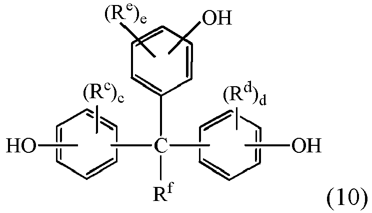 wherein R^{c}, R^{d}, and R^{e} each independently comprise a halogen, C₁₋₁₂ alkoxy, or C₁₋₁₂ alkyl, R^{f} is hydrogen or C₁₋₃ alkyl, and c, d, and e each independently comprise integers of 0 to 4. In some aspects, R^{c}, R^{d}, and R^{e} each independently comprise a halogen, C₁₋₆ alkoxy, or C₁₋₆ alkyl, R^{f} is hydrogen or C₁₋₃ alkyl, and c, d, and e each independently comprise integers of 0 to 2. In some aspects, R^{c}, R^{d}, and R^{e} each independently comprise a halogen, C₁₋₃ alkoxy, or C₁₋₃ alkyl, R^{f} is methyl, and c, d, and e each independently comprise integers of 1 to 2. Non-limiting examples of the trisphenol include 4,4 '-[(3-hydroxyphenyl) methylene] bis (2,6-dimethylphenol), 4,4'-[(3-hydroxyphenyl) methylene] bis (2,3,6-trimethylphenol), 4,4 '-[(4-hydroxyphenyl) methylene] bis (2,6-dimethylphenol), 4,4'-[(4- hydroxyphenyl) methylene] bis (2,3,6-trimethylphenol), 4,4 '-[(2-hydroxy-3-methoxyphenyl) methylene] bis (2,6-dimethylphenol), 2,2 '-[(4-hydroxyphenyl) methylene] bis (3,5,6-trimethylphenol), and 4,4 '-[(2-hydroxyphenyl) methylene] -bis (2,3,6-trimethylphenol). In some aspects, the trisphenol includes 4,4 '-[(4-hydroxyphenyl) methylene] bis (2,6-dimethylphenol), 4,4'-[(4- hydroxyphenyl) methylene] bis (2,3,6-trimethylphenol), or a combination thereof.

In some aspects, the trisphenol comprises the formula (10a) 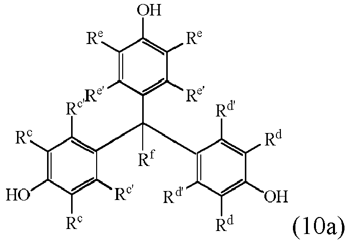 wherein R^{c}, R^{d}, and R^{e} each independently comprise a halogen, C₁₋₁₂ alkoxy, or C₁₋₁₂ alkyl, R^{c'}, R^{d'}, and R^{e'} each independently comprise a hydrogen, halogen, C₁₋₁₂ alkoxy, or C₁₋₁₂ alkyl, and R^{f} is hydrogen or C₁₋₃ alkyl. In some aspects, R^{c}, R^{d}, and R^{e} each independently comprise a halogen, C₁₋₆ alkoxy, or C₁₋₆ alkyl, R^{c'}, R^{d'}, and R^{e'} each independently comprise a hydrogen, halogen, C₁₋₆ alkoxy, or C₁₋₆ alkyl, and R^{f} is hydrogen or C₁₋₃ alkyl. In some aspects, R^{c}, R^{d}, and R^{e} each independently comprise a halogen, C₁₋₃ alkoxy, or C₁₋₃ alkyl, R^{c'}, R^{d'}, and R^{e'} each independently comprise hydrogen, halogen, C₁₋₃ alkoxy, or C₁₋₃ alkyl, and R^{f} is methyl. In certain aspects, R^{c}, R^{d}, and R^{e} are each methyl, R^{c'}, R^{d'}, and R^{e'} are each hydrogen, and R^{f} is methyl.

A method for preparing (10a) includes reacting a molar excess of a monohydric phenol comprising (10a-1) and (10a-2) with ketone (10a-3) to provide the trisphenol (10a).

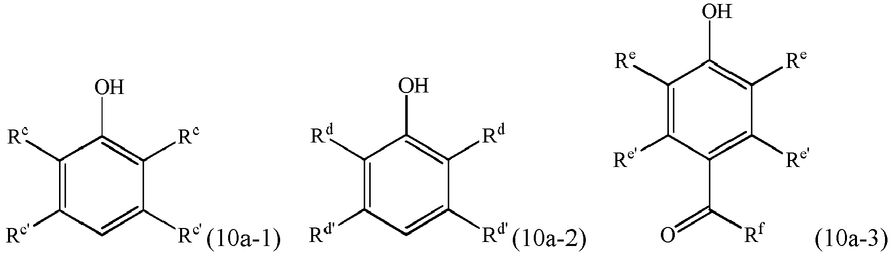

The designations for R^{c}, R^{d}, R^{e}, R^{c'}, R^{d'}, R^{e'}, and R^{f} are as described for (10a). The R groups (i.e., R^{c}, R^{d}, R^{e}, R^{c'}, R^{d'}, R^{e'} ) for monohydric phenols (10a-1), (10a-2), and ketone (10a-3) can be the same or different. In some aspects, R^{c}, R^{d}, R^{e} are the same and R^{c'}, R^{d'}, and R^{e'} are the same. In some aspects, the monohydric phenols (10a-1) and (10a-2) can be 2,6-dimethylphenol and R^{e} of (10a-3) can be CH₃, R^{e'} can be hydrogen, and R^{f} can be CH₃. The ketone (10a-3) can be obtained by formation of an ester from the phenolic OH of (10a-4), followed by a Fries rearrangement of (10a-5) to provide (10a-3). Ester formation (10a-4 to 10a-5) can be accomplished using any method known in the art. Fries rearrangement (10a-5 to 10a-3) is carried out in the presence of a catalyst (e.g., acid catalyst).

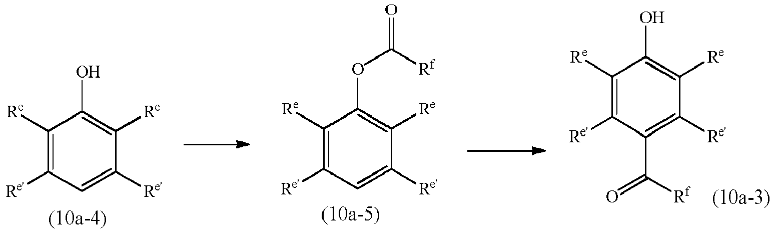

Advantageously, the Fries rearrangement and the reaction of the molar excess of the monohydric phenol (10a-1, 10a-2) with the ketone (10a-3) can be carried out in a one-pot reaction by passing a solution of a molar excess of the monohydric phenol (10a-1, 10a-2) and the ketone (10a-3) through a fixed bed column containing an acidic ion exchange resin. The eluent from the fixed bed column can then be subjected to oxidative polymerization to provide the pol(arylene ether) copolymer having terminal hydroxyl groups. The oxidative polymerization can be performed in the presence of multifunctional phenol or polyphenol different from trisphenol (10a) in addition to trisphenol (10a). Derivatization of the hydroxyl terminal group to provide at least one terminal functional group can be accomplished by any method known in the art.

The poly(arylene ether) copolymers can include at least one terminal functional group. The poly(arylene ether) copolymers can be monofunctional or bifunctional (also referred to as "telechelic"). The terminal functional groups include (meth)acrylate, styrene, -CH₂-(C₆H₄)-CH=CH₂, allyl, cyanate ester, glycidyl ether, anhydride, aniline, maleimide, an activated ester, or a combination thereof.

The poly(arylene ether) copolymers having terminal hydroxyl groups can be prepared by a method comprising oxidative polymerization of a first monohydric phenol, a second monohydric phenol, a multifunctional phenol or polyphenol comprising a novolac, a dicyclopentadiene phenol novolac, a trisphenol, or a combination thereof; optionally in combination with at least one dihydric or polyhydric phenol, in the presence of a polymerization catalyst comprising a catalyst metal ion and a catalyst amine ligand, oxygen, and solvent. The polymerization catalyst can be prepared *in situ* by mixing the catalyst metal ion and the catalyst amine ligand. The solvent can be benzene, toluene, xylenes, mesitylene, chlorobenzene, dichlorobenzenes, chloroform, or combinations thereof. In some aspects, the solvent comprises toluene. The molecular oxygen can be provided, for example, in a purified form or as air.

As disclosed above, the poly(arylene ether) copolymer can have at least one terminal functional group, and the method of making the poly(arylene ether) copolymer further comprises reacting the poly(arylene ether) copolymer having terminal hydroxyl groups with a compound to provide a poly(arylene ether) copolymer having at least one (meth)acrylate, styrene, -CH₂-(C₆H₄)-CH=CH₂, allyl, cyanate ester, glycidyl ether, anhydride, aniline, maleimide, or activated ester terminal functional groups. For example, when a poly(arylene ether) copolymer having at least one vinyl benzyl ether end group is desired, the method can comprise reacting the hydroxyl-terminated poly(arylene ether) copolymer with a vinyl benzyl halide (e.g., vinyl benzyl chloride). When a functional phenylene ether having at least one (meth)acrylic end group is desired, the method can comprise reacting the hydroxyl-terminated poly(arylene ether) copolymer with a (meth)acrylic acid halide or a (meth)acrylic anhydride. Suitable compounds comprising the desired functional groups and a group reactive toward the poly(arylene ether) copolymer having terminal hydroxyl groups can be readily determined by one skilled in the art.

Poly(arylene ether) copolymers can refer to lower molecular weight poly(arylene ether) copolymers. The poly(arylene ether) copolymer can have an intrinsic viscosity of 0.03 to 0.13 deciliter per gram, or 0.05 to 0.1 deciliter per gram, or 0.1 to 0.15 deciliter per gram, measured at 25°C in chloroform using an Ubbelohde viscometer. The poly(arylene ether) copolymer can have a number average molecular weight of 500 to 7,000 grams per mole, and a weight average molecular weight of 500 to 15,000 grams per mole, as determined by gel permeation chromatography using polystyrene standards. In some aspects, the number average molecular weight is 750 to 4,000 grams per mole, and the weight average molecular weight is 1,500 to 9,000 grams per mole, as determined by gel permeation chromatography using polystyrene standards.

The poly(arylene ether) copolymers of the present disclosure can be reactive components in curable compositions. The curable composition comprises a poly(arylene ether) copolymer and a curing promoter. A curing promoter can be selected based on the functional group present on the poly(arylene ether) copolymer and, when present, the auxiliary curable resin or the curable unsaturated monomer composition. For example, the curing promoter can comprise an amine, a dicyandiamide, a polyamide, an amidoamine, a Mannich base, an anhydride, a phenol-formaldehyde resin, a carboxylic acid functional polyester, a polysulfide, a polymercaptan, an isocyanate, a cyanate ester, or a combination comprising at least one of the foregoing.

In some aspects, the curable composition can further include an auxiliary curable resin, a curable unsaturated monomer composition, or both. The auxiliary curable resin can be a thermoset resin, for example, an epoxy resin, a cyanate ester resin, a maleimide resin, a benzoxazine resin, a vinylbenzyl ether resin, an arylcyclobutene resin, a perfluorovinyl ether resin, oligomers or polymers with curable vinyl functionality, or a combination thereof.

Epoxy resins useful as auxiliary curable resins can be produced by reaction of phenols or polyphenols with epichlorohydrin to form polyglycidyl ethers. Examples of useful phenols for production of epoxy resins include substituted bisphenol A, bisphenol F, hydroquinone, resorcinol, tris-(4-hydroxyphenyl)methane, and novolac resins derived from phenol or o-cresol. Epoxy resins can also be produced by reaction of aromatic amines, such as p-aminophenol or methylenedianiline, with epichlorohydrin to form polyglycidyl amines. Epoxy resins can be converted into solid, infusible, and insoluble three dimensional networks by curing with cross-linkers, often called curing agents, or hardeners. Curing agents are either catalytic or coreactive. Coreactive curing agents have active hydrogen atoms that can react with epoxy groups of the epoxy resin to form a cross-linked resin. The active hydrogen atoms can be present in functional groups comprising primary or secondary amines, phenols, thiols, carboxylic acids, or carboxylic acid anhydrides. Examples of coreactive curing agents for epoxy resins include aliphatic and cycloaliphatic amines and amine-functional adducts with epoxy resins, Mannich bases, aromatic amines, polyamides, amidoamines, phenalkamines, dicyandiamide, polycarboxylic acid-functional polyesters, carboxylic acid anhydrides, amine-formaldehyde resins, phenol-formaldehyde resins, polysulfides, polymercaptans, or a combination thereof coreactive curing agents. A catalytic curing agent functions as an initiator for epoxy resin homopolymerization or as an accelerator for coreactive curing agents. Examples of catalytic curing agents include tertiary amines, such as 2-ethyl-4-methylimidazole, Lewis acids, such as boron trifluoride, and latent cationic cure catalysts, such as diaryliodonium salts.

The auxiliary curable resin can be a cyanate ester. Cyanate esters are compounds having a cyanate group (-O-C≡N) bonded to carbon via the oxygen atom, i.e. compounds with C-O-C≡N groups. Cyanate esters useful as auxiliary curable resins can be produced by reaction of a cyanogen halide with a phenol or substituted phenol. Examples of useful phenols include bisphenols utilized in the production of epoxy resins, such as bisphenol A, bisphenol F, and novolac resins based on phenol or o-cresol. Cyanate ester prepolymers are prepared by polymerization/cyclotrimerization of cyanate esters. Prepolymers prepared from cyanate esters and diamines can also be used.

The auxiliary curable resin can be a bismaleimide resin. Bismaleimide resins can be produced by reaction of a monomeric bismaleimide with a nucleophile such as a diamine, aminophenol, or amino benzhydrazide, or by reaction of a bismaleimide with diallyl bisphenol A. Non-limiting examples of bismaleimide resins can include 1,2-bismaleimidoethane, 1,6-bismaleimidohexane, 1,3-bismaleimidobenzene, 1,4-bismaleimidobenzene, 2,4-bismaleimidotoluene, 4,4'-bismaleimidodiphenylmethane, 4,4'-bismaleimidodiphenylether, 3,3'-bismaleimidodiphenylsulfone, 4,4'-bismaleimidodiphenylsulfone, 4,4'-bismaleimidodicyclohexylmethane, 3,5-bis(4-maleimidophenyl)pyridine, 2,6-bismaleimidopyridine, 1,3-bis(maleimidomethyl)cyclohexane, 1,3-bis(maleimidomethyl)benzene, 1,1-bis(4-maleimidophenyl)cyclohexane, 1,3-bis(dichloromaleimido)benzene, 4,4'-bis(citraconimido)diphenylmethane, 2,2-bis(4-maleimidophenyl)propane, 1-phenyl-1,1-bis(4-maleimidophenyl)ethane, N,N-bis(4-maleimidophenyl)toluene, 3,5-bismaleimido-1,2,4-triazole N,N'-ethylenebismaleimide, N,N'-hexamethylenebismaleimide, N,N'-m-phenylenebismaleimide, N,N'-p-phenylenebismaleimide, N,N'-4,4'-diphenylmethanebismaleimide, N,N'-4,4'-diphenyletherbismaleimide, N,N'-4,4'-diphenylsufonebismaleimide, N,N'-4,4'-dicyclohexylmethanebismaleimide, N,N'-.alpha,alpha'-4,4'-dimethylenecyclohexanebismaleimide, N,N'-m-methaxylenebismaleimide, N,N'-4,4'-diphenylcyclohexanebismaleimide, and N,N'-methylenebis(3-chloro-p-phenylene)bismaleimide, as well as the maleimide resins disclosed in U.S. Pat. Nos. 3,562,223 to Bargain et al., and 4,211,860 and 4,211,861 to Stenzenberger. Bismaleimide resins can be prepared by methods known in the art, as described, for example, in U.S. Pat. No. 3,018,290 to Sauters et al. In some aspects, the bismaleimide resin is N,N'-4,4'-diphenylmethane bismaleimide.

The auxiliary curable resin can be a benzoxazine resin. As is well known, benzoxazine monomers are made from the reaction of three reactants, aldehydes, phenols, and primary amines with or without solvent. U.S. Pat. No. 5,543,516 to Ishida describes a solvent-free method of forming benzoxazine monomers. An article by Ning and Ishida in Journal of Polymer Science, Chemistry Edition, vol. 32, page 1121 (1994) describes a procedure using a solvent. The procedure using solvent is generally common to the literature of benzoxazine monomers.

The preferred phenolic compounds for forming benzoxazines include phenols and polyphenols. The use of polyphenols with two or more hydroxyl groups reactive in forming benzoxazines can result in branched or crosslinked products. The groups connecting the phenolic groups into a phenol can be branch points or connecting groups in the polybenzoxazine.

Exemplary phenols for use in the preparation of benzoxazine monomers include phenol, cresol, resorcinol, catechol, hydroquinone, 2-allylphenol, 3-allylphenol, 4-allylphenol, 2,6-dihydroxynaphthalene, 2,7-dihydrooxynapthalene, 2-(diphenylphosphoryl)hydroquinone, 2,2'-biphenol, 4,4-biphenol, 4,4'-isopropylidenediphenol (bisphenol A), 4,4'-isopropylidenebis(2-methylphenol), 4,4'-isopropylidenebis(2-allylphenol), 4,4'(1,3-phenylenediisopropylidene)bisphenol (bisphenol M), 4,4'-isopropylidenebis(3-phenylphenol) 4,4'-(1,4-phenylenediisoproylidene)bisphenol (bisphenol P), 4,4'-ethylidenediphenol (bisphenol E), 4,4'oxydiphenol, 4,4'thiodiphenol, 4,4'-sufonyldiphenol, 4,4'sulfinyldiphenol, 4,4'-hexafluoroisoproylidene)bisphenol (Bisphenol AF), 4,4'(1-phenylethylidene)bisphenol (Bisphenol AP), bis(4-hydroxyphenyl)-2,2-dichloroethylene (Bisphenol C), Bis(4-hydroxyphenyl)methane (Bisphenol-F), 4,4'-(cyclopentylidene)diphenol, 4,4'-(cyclohexylidene)diphenol (Bisphenol Z), 4,4'-(cyclododecylidene)diphenol 4,4'-(bicyclo[2.2.1]heptylidene)diphenol, 4,4'-(9H-fluorene-9,9-diyl)diphenol, isopropylidenebis(2-allylphenol), 3,3-bis(4-hydroxyphenyl)isobenzofuran-1(3H)-one, 1-(4-hydroxyphenyl)-3,3-dimethyl-2,3-dihydro-1H-inden-5-ol, 3,3,3',3'-tetramethyl-2,2',3,3'-tetrahydro-1,1'-spirobi[indene]-5,6'-diol (Spirobiindane), dihydroxybenzophenone (bisphenol K), tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tetrakis(4-hydroxyphenyl)ethane dicyclopentadienylbis(2,6-dimethyl phenol), dicyclopentadienyl bis(ortho-cresol), dicyclopentadienyl bisphenol, and the like.

The aldehyde used to form the benzoxazine can be any aldehyde. In some aspects, the aldehyde has 1-10 carbon atoms. In some aspects, the aldehyde is formaldehyde. The amine used to form the benzoxazine can be an aromatic amine, an aliphatic amine, an alkyl substituted aromatic, or an aromatic substituted alkyl amine. The amine can also be a polyamine, although the use of polyamines will, under some circumstances, yield polyfunctional benzoxazine monomers. Polyfunctional benzoxazine monomers are more likely to result in branched and/or crosslinked polybenzoxazines than monofunctional benzoxazines, which would be anticipated to yield thermoplastic polybenzoxazines.

The amines for forming benzoxazines generally have 1-40 carbon atoms unless they include aromatic rings, and then they can have 6-40 carbon atoms. The amine of di- or polyfunctional can also serve as a branch point to connect one polybenzoxazine to another. Thermal polymerization has been the preferred method for polymerizing benzoxazine monomers. The temperature to induce thermal polymerization is typically varied from 150-300 ° C. The polymerization is typically done in bulk, but could be done from solution or otherwise. Catalysts, such as carboxylic acids, have been known to slightly lower the polymerization temperature or accelerate the polymerization rate at the same temperature.

The auxiliary curable resin can be a vinylbenzyl ether resin. Vinyl benzyl ether resins can be readily prepared from condensation of a phenol with a vinyl benzyl halide, such as vinylbenzyl chloride to produce a vinylbenzyl ether. Bisphenol-A and trisphenols and polyphenols are generally used to produce poly(vinylbenzyl ethers) which can be used to produce crosslinked thermosetting resins. Vinyl benzyl ethers useful in the present composition can include those vinylbenzyl ethers produced from reaction of vinylbenzyl chloride or vinylbenzyl bromide with resorcinol, catechol, hydroquinone, 2,6-dihydroxy naphthalene, 2,7-dihydroxynapthalene, 2-(diphenylphosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol (bisphenol A), 4,4'-isopropylidenebis(2,6-dibromophenol) (tetrabromobisphenol A), 4,4'-isopropylidenebis(2,6-dimethylphenol) (teramethylbisphenol A), 4,4'-isopropylidenebis(2-methylphenol), 4,4'-isopropylidenebis(2-allylphenol), 4,4'(1,3-phenylenediisopropylidene)bisphenol (bisphenol M), 4,4'-isopropylidenebis(3-phenylphenol) 4,4'-(1,4-phenylenediisoproylidene)bisphenol (bisphenol P), 4,4'-ethylidenediphenol (bisphenol E), 4,4'oxydiphenol, 4,4'thiodiphenol, 4,4'thiobis(2,6-dimethylphenol), 4,4'-sufonyldiphenol, 4,4'-sufonylbis(2,6-dimethylphenol) 4,4'sulfonyldiphenol, 4,4'-hexafluoroisoproylidene)bisphenol (Bisphenol AF), 4,4'(1-phenylethylidene)bisphenol (Bisphenol AP), bis(4-hydroxyphenyl)-2,2-dichloroethylene (Bisphenol C), bis(4-hydroxyphenyl)methane (Bisphenol-F), bis(2,6-dimethyl-4-hydroxyphenyl)methane, 4,4'-(cyclopentylidene)diphenol, 4,4'-(cyclohexylidene)diphenol (Bisphenol Z), 4,4'-(cyclododecylidene)diphenol 4,4'-(bicyclo[2.2.1]heptylidene)diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (Spirobiindane), dihydroxybenzophenone (bisphenol K), tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)phenylphosphine oxide, dicyclopentadienylbis(2,6-dimethyl phenol), dicyclopentadienyl bis(ortho-cresol), dicyclopentadienyl bisphenol, and the like.

The auxiliary curable resin can be an arylcyclobutene resin. Arylcyclobutenes include those derived from compounds of the general structure 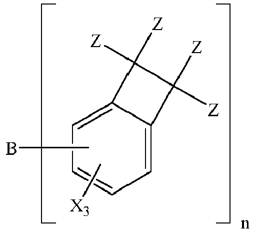 wherein B is an organic or inorganic radical of valence n (including carbonyl, sulfonyl, sulfinyl, sulfide, oxy, alkylphosphonyl, arylphosphonyl, isoalkylidene, cycloalkylidene, arylalkylidene, diarylmethylidene, methylidene dialkylsilanyl, arylalkylsilanyl, diarylsilanyl and C₆₋₂₀ phenolic compounds); each occurrence of X independently comprises hydroxy or C₁₋₂₄ hydrocarbyl (including linear and branched alkyl and cycloalkyl); and each occurrence of Z independently comprises hydrogen, halogen, or C₁₋₁₂ hydrocarbyl; and n is 1-1000, or 1-8, or 2, 3, or 4. Other useful arylcyclobutenes and methods of arylcyclobutene synthesis can be found in U.S. Patent Nos. 4,743,399, 4,540,763, 4,642,329, 4,661,193, and 4,724,260 to Kirchhoff et al., and 5,391,650 to Brennan et al.

The auxiliary curable resin can be a perfluorovinyl ether resin. Perfluorovinyl ethers are typically synthesized from phenols and bromotetrafluoroethane followed by zinc catalyzed reductive elimination producing ZnFBr and the desired perfluorovinylether. By this route bis, tris, and other polyphenols can produce bis-, tris- and poly(perfluorovinylether)s. Non-limiting examples of phenols useful in their synthesis include resorcinol, catechol, hydroquinone, 2,6-dihydroxy naphthalene, 2,7-dihydroxynapthalene, 2-(diphenylphosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol (bisphenol A), 4,4'-isopropylidenebis(2,6-dibromophenol) (tetrabromobisphenol A), 4,4'-isopropylidenebis(2,6-dimethylphenol) (teramethylbisphenol A), 4,4'-isopropylidenebis(2-methylphenol), 4,4'-isopropylidenebis(2-allylphenol), 4,4'(1,3-phenylenediisopropylidene)bisphenol (bisphenol M), 4,4'-isopropylidenebis(3-phenylphenol) 4,4'-(1,4-phenylenediisoproylidene)bisphenol (bisphenol P), 4,4'-ethylidenediphenol (bisphenol E), 4,4'oxydiphenol, 4,4'thiodiphenol, 4,4'thiobis(2,6-dimethylphenol), 4,4'-sufonyldiphenol, 4,4'-sufonylbis(2,6-dimethylphenol) 4,4'sulfinyldiphenol, 4,4'-hexafluoroisoproylidene)bisphenol (Bisphenol AF), 4,4'(1-phenylethylidene)bisphenol (Bisphenol AP), bis(4-hydroxyphenyl)-2,2-dichloroethylene (Bisphenol C), bis(4-hydroxyphenyl)methane (Bisphenol-F), bis(2,6-dimethyl-4-hydroxyphenyl)methane, 4,4'-(cyclopentylidene)diphenol, 4,4'-(cyclohexylidene)diphenol (Bisphenol Z), 4,4'-(cyclododecylidene)diphenol 4,4'-(bicyclo[2.2.1]heptylidene)diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (Spirobiindane), dihydroxybenzophenone (bisphenol K), tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)phenylphosphine oxide, dicyclopentadienylbis(2,6-dimethyl phenol), dicyclopentadienyl bis(2-methylphenol), dicyclopentadienyl bisphenol, and the like.

The curable composition can include an oligomer or polymer with curable vinyl functionality. Such materials include oligomers and polymers having crosslinkable unsaturation. Examples include styrene butadiene rubber (SBR), butadiene rubber (BR), and nitrile butadiene rubber (NBR) having unsaturated bonding based on butadiene; natural rubber (NR), isoprene rubber (IR), chloroprene rubber (CR), butyl rubber (a copolymer of isobutylene and isoprene, IIR), and halogenated butyl rubber having unsaturated bonding based on isoprene; ethylene-α-olefin copolymer elastomers having unsaturated bonding based on dicyclopentadiene (DCPD), ethylidene norbornene (ENB), or 1,4-dihexadiene (1,4-HD) (namely, ethylene-α-olefin copolymers obtained by copolymerizing ethylene, an α-olefin, and a diene, such as ethylenepropylene-diene terpolymer (EPDM) and ethylene-butene-diene terpolymer (EBDM). In some aspects, an EBDM is used. Examples also include hydrogenated nitrile rubber, fluorocarbon rubbers such as vinylidenefluoride-hexafluoropropene copolymer and vinylidenefluoride-pentafluoropropene copolymer, epichlorohydrin homopolymer (CO), copolymer rubber (ECO) prepared from epichlorohydrin and ethylene oxide, epichlorohydrin allyl glycidyl copolymer, propylene oxide allyl glycidyl ether copolymer, propylene oxide epichlorohydrin allyl glycidyl ether terpolymer, acrylic rubber (ACM), urethane rubber (U), silicone rubber (Q), chlorosulfonated polyethylene rubber (CSM), polysulfide rubber (T) and ethylene acrylic rubber. Further examples include various liquid rubbers, for example various types of liquid butadiene rubbers, and the liquid atactic butadiene rubber that is butadiene polymer with 1,2-vinyl connection prepared by anionic living polymerization. It is also possible to use liquid styrene butadiene rubber, liquid nitrile butadiene rubber (CTBN, VTBN, ATBN, etc. by Ube Industries, Ltd.), liquid chloroprene rubber, liquid polyisoprene, dicyclopentadiene type hydrocarbon polymer, and polynorbornene (for example, as sold by ELF ATOCHEM).

Polybutadiene resins, generally polybutadienes containing high levels of 1,2 addition can be desirable in curable compositions. Examples include the functionalized polybutadienes and poly(butadiene-styrene) random copolymers sold by RICON RESINS, Inc. under the trade names RICON, RICACRYL, and RICOBOND resins. These include butadienes containing both low vinyl content such as RICON 130, 131, 134, 142; polybutadienes containing high vinyl content such as RICON 150, 152, 153, 154, 156, 157, and P30D; random copolymers of styrene and butadiene including RICON 100, 181, 184, and maleic anhydride grafted polybutadienes and the alcohol condensates derived therefrom such as RICON 130MA8, RICON MA13, RICON 130MA20, RICON 131MAS, RICON 131MA10, RICON MA17, RICON MA20, RICON 184MA6 and RICON 156MA17. Also included are polybutadienes that can be used to improve adhesion including RICOBOND 1031, RICOBOND 1731, RICOBOND 2031, RICACRYL 3500, RICOBOND 1756, RICACRYL 3500; the polybutadienes RICON 104 (25% polybutadiene in heptane), RICON 257 (35% polybutadiene in styrene), and RICON 257 (35% polybutadiene in styrene); (meth)acrylic functionalized polybutadienes such as polybutadiene diacrylates and polybutadiene dimethacrylates. These materials are sold under the tradenames RICACRYL 3100, RICACRYL 3500, and RICACRYL 3801. Also are included are powder dispersions of functional polybutadiene derivatives including, for example, RICON 150D, 152D, 153D, 154D, P30D, RICOBOND 0 1731 HS, and RICOBOND 1756HS. Further butadiene resins include poly(butadiene-isoprene) block and random copolymers, such as those with molecular weights from 3,000-50,000 grams per mole and polybutadiene homopolymers having molecular weights from 3,000-50,000 grams per mole. Also included are polybutadiene, polyisoprene, and polybutadiene-isoprene copolymers functionalized with maleic anhydride functions, 2-hydroxyethylmaleic functions, or hydroxylated functionality.

Further examples of oligomers and polymers with curable vinyl functionality include unsaturated polyester resins based on maleic anhydride, fumaric acid, itaconic acid and citraconic acid; unsaturated epoxy (meth)acrylate resins containing acryloyl groups, or methacryloyl group; unsaturated epoxy resins containing vinyl or allyl groups, urethane (meth)acrylate resin, polyether (meth)acrylate resin, polyalcohol (meth)acrylate resins, alkyd acrylate resin, polyester acrylate resin, spiroacetal acrylate resin, diallyl phthalate resin, diallyl tetrabromophthalate resin, diethyleneglycol bisallylcarbonate resin, and polyethylene polythiol resin.

In some aspects, the curable composition comprises a curable unsaturated monomer composition. The curable unsaturated monomer composition can include, for example, a monofunctional styrenic compound (e.g., styrene), a monofunctional (meth)acrylic compound, a polyfunctional allylic compound, a polyfunctional (meth)acrylate, a polyfunctional (meth)acrylamide, a polyfunctional styrenic compound, or a combination thereof. For example, in some aspects, the curable unsaturated monomer composition can be an alkene-containing monomer or an alkyne-containing monomer. Exemplary alkene- and alkyne-containing monomers include those described in U.S. Patent No. 6,627,704 to Yeager et al. Non-limiting examples of alkene-containing monomers include acrylate, methacrylate, and vinyl ester functionalized materials capable of undergoing free radical polymerization. Of particular use are acrylate and methacrylate materials. They can be monomers and/or oligomers such as (meth)acrylates, (meth)acrylamides, N-vinylpyrrolidone and vinylazlactones as disclosed in U.S. Pat. No. 4,304,705 of Heilman et al. Such monomers include mono-, di-, and polyacrylates and methacrylates, such as methyl acrylate, methyl methacrylate, ethyl acrylate, isopropyl methacrylate, isooctyl acrylate, isobornyl acrylate, isobornyl methacrylate, acrylic acid, n-hexyl acrylate, tetrahydrofurfuryl acrylate, N-vinylcaprolactam, N-vinylpyrrolidone, acrylonitrile, stearyl acrylate, allyl acrylate, glycerol diacrylate, glycerol triacrylate, ethylene glycol diacrylate, diethylene glycol diacrylate, triethylene glycol dimethacrylate, 1,6-hexanediol diacrylate, 1,3-propanediol diacrylate, 1,3-propanediol dimethacrylate, trimethylolpropane triacrylate, 1,2,4-butanetriol trimethacrylate, 2- phenoxyethyl acrylate, 1,4-cyclohexanediol diacrylate, pentaerythritol triacrylate, pentaerythritol tetraacrylate, pentaerythritol tetramethacrylate, sorbitol hexaacrylate, bis[1-(2-acryloxy)]-p- ethoxyphenyldimethylmethane, 2,2-bis[1-(3-acryloxy-2-hydroxy)]propoxyphenylpropane, tris(hydroxyethyl)isocyanurate trimethacrylate; the bis-acrylates and bis-methacrylates of polyethylene glycols of molecular weight average 200-500 grams per mole, bis-acrylates and bis-methacrylates of polybutadienes of molecular weight average 1000-10,000 grams per mole, copolymerizable mixtures of acrylated monomers such as those disclosed in U.S. Pat. No. 4,652,274 to Boettcher et al. and acrylated oligomers such as those disclosed in U.S. Pat. No. 4,642,126 to Zador et al.

It can be desirable to crosslink the alkene- or alkyne-containing monomer. Particularly useful as crosslinker compounds are acrylates such as allyl acrylate, glycerol diacrylate, glycerol triacrylate, ethylene glycol diacrylate, diethylene glycol diacrylate, triethylene glycol dimethacrylate, 1,6-hexanediol diacrylate, 1,3-propanediol diacrylate, 1, 3-propanediol dimethacrylate, trimethylolpropane triacrylate, 1,2,4- butanetriol trimethacrylate, 1,4-cyclohexanediol diacrylate, pentaerythritol triacrylate, pentaerythritol tetraacrylate, pentaerythritol tetramethacrylate, sorbitol hexaacrylate, bis[1-(2- acryloxy)]-p-ethoxyphenyldimethylmethane, 2,2-bis[1-(3-acryloxy-2-hydroxy)]propoxyphenylpropane, tris(hydroxyethyl)isocyanurate trimethacrylate; and the bis-acrylates and bis-methacrylates of polyethylene glycols of average molecular weight 200-500 grams per mole. Also included are allylic resins and styrenic resins for example triallylisocyanurate and trimethallylisocyanurate, trimethallylcyanurate, triallylcyanurate, divinyl benzene and dibromostyrene and others described in U.S. Patent No. 6,627,704 to Yeager et al.

In addition to the poly(arylene ether), the curing promoter, and, when present, the auxiliary resin or unsaturated monomer composition, the curable composition can, optionally, comprise a solvent. The solvent can have an atmospheric boiling point of 50 to 250°C. A boiling point in this range facilitates removal of solvent from the curable composition while minimizing or eliminating the effects of bubbling during solvent removal.

The solvent can be, for example, a C₃₋₈ ketone, a C₃₋₈ *N*,*N*-dialkylamide, a C₄₋₁₆ dialkyl ether, a C₆₋₁₂ aromatic hydrocarbon, a C₁₋₃ chlorinated hydrocarbon, a C₃₋₆ alkyl alkanoate, a C₂₋₆ alkyl cyanide, or a combination thereof. The carbon number ranges refer to the total number of carbon atoms in the solvent molecule. For example, a C₄₋₁₆ dialkyl ether has 4 to 16 total carbon atoms, and the two alkyl groups can be the same or different. As other examples, the 3-8 carbon atoms in the "*N*,*N*-dialkylamide" include the carbon atom in the amide group, and the 2-6 carbons in the "C₂₋₆ alkyl cyanides" include the carbon atom in the cyanide group. Specific ketone solvents include, for example, acetone, methyl ethyl ketone, methyl isobutyl ketone, or a combination thereof. Specific C₄₋₈ *N*,*N*-dialkylamide solvents include, for example, dimethylformamide, dimethylacetamide, *N*-methyl-2-pyrrolidone, or a combination thereof. Specific dialkyl ether solvents include, for example, tetrahydrofuran, ethylene glycol monomethylether, dioxane, or a combination thereof. In some aspects, the C₄₋₁₆ dialkyl ethers include cyclic ethers such as tetrahydrofuran and dioxane. In some aspects, the C₄₋₁₆ dialkyl ethers are noncyclic. The dialkyl ether can, optionally, further include one or more ether oxygen atoms within the alkyl groups and one or more hydroxy group substituents on the alkyl groups. The aromatic hydrocarbon solvent can comprise an ethylenically unsaturated solvent. Exemplary aromatic hydrocarbon solvents include, for example, benzene, toluene, xylenes, styrene, divinylbenzenes, or a combination thereof. The aromatic hydrocarbon solvent is preferably non-halogenated. As used herein, the term "non-halogenated" means that the solvent does not include any fluorine, chlorine, bromine, or iodine atoms. Specific C₃₋₆ alkyl alkanoates include, for example, methyl acetate, ethyl acetate, methyl propionate, ethyl propionate, or a combination thereof. Specific C₂₋₆ alkyl cyanides include, for example, acetonitrile, propionitrile, butyronitrile, or a combination thereof. In some aspects, the solvent is acetone. In some aspects, the solvent is methyl ethyl ketone. In some aspects, the solvent is methyl isobutyl ketone. In some aspects, the solvent is *N*-methyl-2-pyrrolidone. In some aspects, the solvent is dimethylformamide. In some aspects, the solvent is ethylene glycol monomethyl ether.

When a solvent is utilized, the curable composition can comprise 2-100 parts by weight of the solvent, based on 100 parts by weight total of the poly(arylene ether), the curing promoter, and the auxiliary resin or unsaturated monomer composition (when present). For example, the solvent amount can be 5-80 parts by weight, or 10-60 parts by weight, or 20-40 parts by weight, based on 100 parts by weight total of the poly(arylene ether), the curing promoter, and any auxiliary resin. The solvent can be chosen, in part, to adjust the viscosity of the curable composition. Thus, the solvent amount can depend on variables including the type and amount of poly(arylene ether), the type and amount of curing promoter, the type and amount of auxiliary resin, and the processing temperature used for any subsequent processing of the curable composition, for example, impregnation of a reinforcing structure with the curable composition for the preparation of a composite.

The curable composition can, optionally, further comprise one or more additives. Exemplary additives include, for example, solvents, dyes, pigments, colorants, antioxidants, heat stabilizers, light stabilizers, plasticizers, lubricants, flow modifiers, drip retardants, flame retardants, antiblocking agents, antistatic agents, flow-promoting agents, processing aids, substrate adhesion agents, mold release agents, toughening agents, low-profile additives, stress-relief additives, inorganic fillers, or a combination thereof.

The curable composition can comprise the poly(arylene ether) described herein, a curing promoter, a solvent, and an auxiliary resin, a curable unsaturated monomer composition, or a combination thereof. In some aspects, an auxiliary curable resin and/or a curable unsaturated monomer composition is absent.

The curable composition can comprise 1-99 wt% of the auxiliary curable resin, a curable unsaturated monomer composition, or both and 1-99 wt% of the poly(arylene ether), each based on the total weight of the curable composition. For example, the composition can include 20-99 wt% of the auxiliary curable resin, a curable unsaturated monomer composition, or both and 1-80 wt% of the poly(arylene ether) .

A thermoset composition (i.e., cured composition) can be obtained by heating the curable composition defined herein for a time and temperature sufficient to evaporate the solvent and effect curing. For example, the curable composition can be heated to a temperature of 50-250 °C to cure the composition and provide the thermoset composition. In curing, a cross-linked, three-dimensional polymer network is formed. For certain thermoset resins, for example (meth)acrylate resins, curing can also take place by irradiation with actinic radiation at a sufficient wavelength and time. In some aspects, curing the composition can include injecting the curable composition into a mold, and curing the injected composition at 150-250 °C in the mold.

The thermoset composition described herein can also be particularly well suited for use in forming various articles. For example, useful articles can be in the form of a composite, a foam, a fiber, a layer, a coating, an encapsulant, an adhesive, a sealant, a molded component, a prepreg, a casing, a laminate, a metal clad laminate, an electronic composite, a structural composite, or a combination thereof. In some aspects, the article can be in the form of a composite that can be used in a variety of applications, for example printed circuit boards.

This disclosure further encompasses the following aspects.
Aspect 1. A poly(arylene ether) copolymer wherein the poly(arylene ether) copolymer is a product of oxidative copolymerization of monomers comprising a first monohydric phenol; a second monohydric phenol; a multifunctional phenol or polyphenol comprising a novolac, a dicyclopentadiene phenol novolac, a trisphenol, or a combination thereof; and optionally, at least one terminal functional group.
Aspect 2: The poly(arylene ether) copolymer of Aspect 1, wherein: the first monohydric phenol comprises the formula (1) 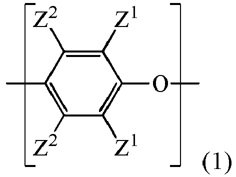 wherein each occurrence of Z¹ independently comprises halogen, unsubstituted or substituted C₁₋₁₅ primary or secondary hydrocarbyl, C₁-₁₅ hydrocarbylthio, C₁-₁₅ hydrocarbyloxy, or C₂₋C₁₅ halohydrocarbyloxy wherein at least two carbon atoms separate the halogen and oxygen atoms; each occurrence of Z² independently comprises hydrogen, halogen, unsubstituted or substituted C₁-₁₅ primary or secondary hydrocarbyl, C₁-₁₅ hydrocarbylthio, C₁-₁₅ hydrocarbyloxy, or C₂₋₁₂ halohydrocarbyloxy wherein at least two carbon atoms separate the halogen and oxygen atoms; at least one of Z¹, Z², or a combination thereof is an unsubstituted or substituted C₁-₁₅ primary or secondary hydrocarbyl; each occurrence of Z¹ are not simultaneously methyl, and each occurrence of Z² are not simultaneously methyl.
Aspect 3: The poly(arylene ether) copolymer of any one of the preceding aspects, wherein the second monohydric phenol comprises 2,6-dimethyl phenol, 2-allyl-6-methyl phenol, 2-phenyl-6-methyl phenol, 2,3,6-trimethyl phenol, or a combination thereof.
Aspect 4: The poly(arylene ether) copolymer of any one of the preceding aspects, wherein the multifunctional phenol or polyphenol comprises a novolac comprising formula (8-1), formula (8-2), or a combination thereof 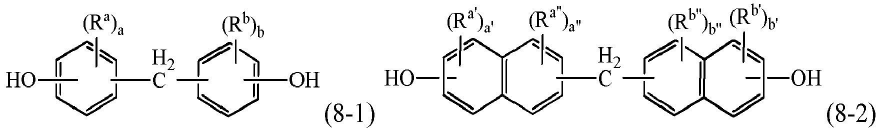 wherein R^{a} and R^{b} each independently comprise a halogen, hydroxyl, C₁₋₁₂ alkoxy, or C₁₋₁₂ alkyl, and a and b each independently comprise integers of 0 to 4; R^{a'}, R^{a}, R^{b'}, and R^{b"} each independently comprise a halogen, a hydroxyl, C₁₋₁₂ alkoxy, or C₁₋₁₂ alkyl, and a', a", b', and b" each independently comprise integers of 0 to 3; a dicyclopentadiene phenol novolac comprising formula (9) 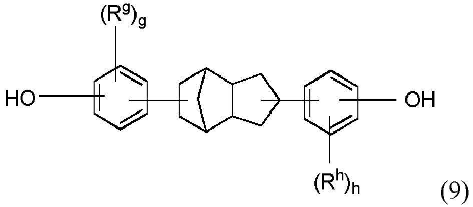 wherein R^{g} and R^{h} each independently comprise a hydrogen, hydroxyl, halogen, C₁₋₁₂ alkoxy, or C₁₋₁₂ alkyl, and g and h each independently comprise integers of 0 to 4; a trisphenol comprising formula (10) 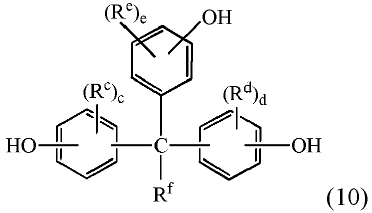 wherein R^{c}, R^{d}, and R^{e} each independently comprise a hydrogen, halogen, C₁₋₁₂ alkoxy, or C₁₋₁₂ alkyl, R^{f} is hydrogen or C₁₋₃ alkyl, and c, d, and e each independently comprise integers of 0 to 4; or a combination thereof.
Aspect 5: The poly(arylene ether) copolymer of any one of Aspects 2-4, wherein the at least one of Z¹, Z², or a combination thereof of the first monohydric phenol comprises a substituted or unsubstituted C₁₋₆alkyl, C₂₋₆alkenyl, C₂₋₆alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆₋₁₂aryl, or (C₆₋₁₂aryl)C₁₋₃alkyl; preferably a substituted or unsubstituted C₁₋₃alkyl, C₂₋₄alkenyl, C₂₋₄alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆aryl, or (C₆aryl)C₁₋₃alkyl;more preferably methyl, ethyl, allyl, a substituted or unsubstituted cyclohexyl, phenyl, -CH₂-adamantyl, -(CH₂)₂-bicyclo[2.2.1]heptenyl, C₁₋₃alkyl(C₃₋₁₂cycloalkenyl) different from the -(CH₂)₂-bicyclo[2.2.1]heptenyl, wherein each occurrence of Z¹ are not simultaneously methyl, and each occurrence of Z² are not simultaneously methyl.
Aspect 6: The poly(arylene ether) copolymer of any one of Aspects 2-5, wherein one occurrence of Z¹ of the first monohydric phenol is methyl; and the other occurrence of Z¹ of the first monohydric phenol comprises methyl, allyl, substituted or unsubstituted cyclohexyl, phenyl, -CH₂-adamantyl, -(CH₂)₂-bicyclo[2.2.1]heptenyl, or C₁₋₃alkyl(C₃₋₁₂cycloalkenyl) different from the -(CH₂)₂-bicyclo[2.2.1]heptenyl.
Aspect 7: The poly(arylene ether) copolymer of any one of the preceding aspects, wherein the trisphenol is present and comprises formula (10a) 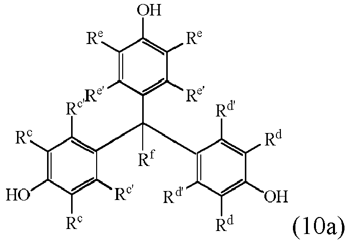 wherein R^{c}, R^{d}, and R^{e} each independently comprise a halogen, C₁₋₁₂ alkoxy, or C₁₋₁₂ alkyl; R^{c'}, R^{d'}, and R^{e'} each independently comprise a hydrogen, halogen, C₁₋₁₂ alkoxy, or C₁₋₁₂ alkyl, and R^{f} is hydrogen or C₁₋₃ alkyl.
Aspect 8: The poly(arylene ether) copolymer of any one of the preceding aspects, wherein at least one terminal functional group is present and comprises (meth)acrylate, styrene, - CH₂-(C₆H₄)-CH=CH₂, allyl, cyanate ester, glycidyl ether, anhydride, aniline, maleimide, an activated ester, or a combination thereof.
Aspect 9: A method of making the poly(arylene ether) copolymer of Aspect 7 comprising oxidatively polymerizing the first monohydric phenol, the second monohydric phenol, and a trisphenol precursor having the structure 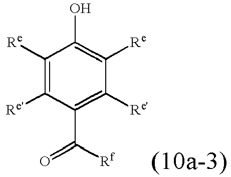 wherein each occurrence of R^{e} independently comprises halogen, C₁₋₁₂ alkoxy, or C₁₋₁₂ alkyl; each occurrence of R^{e'} independently comprises a hydrogen, halogen, C₁₋₁₂ alkoxy, or C₁₋₁₂ alkyl, and R^{f} is hydrogen or C₁₋₃ alkyl; and optionally, the novolac, the dicyclopentadiene phenol novolac, or a trisphenol different from the trisphenol of Aspect 7 to provide the poly(arylene ether) copolymer having terminal hydroxyl groups; and optionally, reacting the terminal hydroxyl groups of the poly(arylene ether) copolymer with a compound to provide the poly(arylene ether) copolymer having at least one terminal functional group.
Aspect 10: A method of making the poly(arylene ether) copolymer of Aspects 1-8 comprising oxidatively polymerizing the first monohydric phenol, the second monohydric phenol; and the multifunctional phenol or polyphenol to provide the poly(arylene ether) copolymer having terminal hydroxyl groups; and optionally, reacting the terminal hydroxyl groups of the poly(arylene ether) copolymer with a compound to provide the poly(arylene ether) copolymer having at least one terminal functional group.
Aspect 11: A curable composition comprising the poly(arylene ether) copolymer of any one of Aspects 1 to 8; and a curing promoter comprising an amine, a dicyandiamide, a polyamide, an amidoamine, a Mannich base, an anhydride, a phenol-formaldehyde resin, a carboxylic acid functional polyester, a polysulfide, a polymercaptan, an isocyanate, a cyanate ester, or a combination thereof.
Aspect 12: The curable composition of Aspect 10 or Aspect 11, further comprising an auxiliary curable resin comprising an epoxy resin, a cyanate ester resin, a maleimide resin, a benzoxazine resin, a vinylbenzyl ether resin, an arylcyclobutene resin, a perfluorovinyl ether resin, copolymers or polymers with curable vinyl functionality, or a combination thereof; a curable unsaturated monomer comprising a monofunctional styrenic compound, a monofunctional (meth)acrylic compound, a polyfunctional allylic compound, a polyfunctional (meth)acrylate, a polyfunctional (meth)acrylamide, a polyfunctional styrenic compound, or a combination thereof; or a combination thereof.
Aspect 13: A thermoset composition comprising the curable composition of any one of Aspects 10 to 12, wherein the thermoset composition has a glass transition temperature of greater than or equal to 180 °C, preferably greater than or equal to 190 °C, more preferably greater than or equal to 200 °C, as determined according to differential scanning calorimetry as per ASTM D3418 with a 20°C/min heating rate.
Aspect 14: An article comprising the thermoset composition of Aspect 13, wherein the article is a composite, a foam, a fiber, a layer, a coating, an encapsulant, an adhesive, a sealant, a molded component, a prepreg, a casing, a laminate, a metal clad laminate, an electronic composite, a structural composite, or a combination thereof.
Aspect 15: A method for the manufacture of a thermoset composition, the method comprising curing the curable composition of any one of Aspects 10 to 12, preferably at a temperature of 50 to 250 °C.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. In addition, it is to be understood that the described elements may be combined in any suitable manner in the various aspects. A "combination thereof' is open and includes any combination comprising at least one of the listed components or properties optionally together with a like or equivalent component or property not listed Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C6H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A poly(arylene ether) copolymer wherein the poly(arylene ether) copolymer is a product of oxidative copolymerization of monomers comprising a first monohydric phenol; a second monohydric phenol; a multifunctional phenol or polyphenol comprising a novolac, a dicyclopentadiene phenol novolac, a trisphenol, or a combination thereof; and optionally, at least one terminal functional group.

2. The poly(arylene ether) copolymer of Claim 1, wherein:
the first monohydric phenol comprises the formula (1) 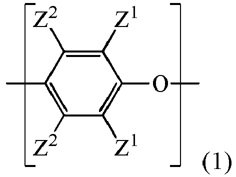 wherein
each occurrence of Z¹ independently comprises halogen, unsubstituted or substituted C₁₋₁₅ primary or secondary hydrocarbyl, C₁₋₁₅ hydrocarbylthio, C₁-₁₅ hydrocarbyloxy, or C₂₋C₁₅ halohydrocarbyloxy wherein at least two carbon atoms separate the halogen and oxygen atoms;
each occurrence of Z² independently comprises hydrogen, halogen, unsubstituted or substituted C₁-₁₅ primary or secondary hydrocarbyl, C₁-₁₅ hydrocarbylthio, C₁-₁₅ hydrocarbyloxy, or C₂₋₁₂ halohydrocarbyloxy wherein at least two carbon atoms separate the halogen and oxygen atoms;
at least one of Z¹, Z², or a combination thereof is an unsubstituted or substituted C₁-₁₅ primary or secondary hydrocarbyl;
each occurrence of Z¹ are not simultaneously methyl, and
each occurrence of Z² are not simultaneously methyl.

3. The poly(arylene ether) copolymer of any one of the preceding claims, wherein the second monohydric phenol comprises 2,6-dimethyl phenol, 2-allyl-6-methyl phenol, 2-phenyl-6-methyl phenol, 2,3,6-trimethyl phenol, or a combination thereof.

4. The poly(arylene ether) copolymer of any one of the preceding claims, wherein the multifunctional phenol or polyphenol comprises
a novolac comprising formula (8-1), formula (8-2), or a combination thereof 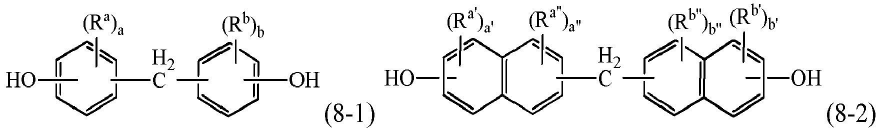 wherein
R^{a} and R^{b} each independently comprise a halogen, hydroxyl, C₁₋₁₂ alkoxy, or C₁₋₁₂ alkyl, and a and b each independently comprise integers of 0 to 4;
R^{a'}, R^{a"}, R^{b'}, and R^{b"} each independently comprise a halogen, a hydroxyl, C₁₋₁₂ alkoxy, or C₁₋₁₂ alkyl, and a', a", b', and b" each independently comprise integers of 0 to 3;
a dicyclopentadiene phenol novolac comprising formula (9) 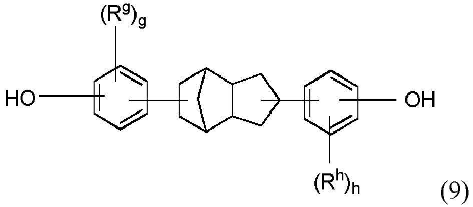 wherein R^{g} and R^{h} each independently comprise a hydrogen, hydroxyl, halogen, C₁₋₁₂ alkoxy, or C₁₋₁₂ alkyl, and g and h each independently comprise integers of 0 to 4;
a trisphenol comprising formula (10) 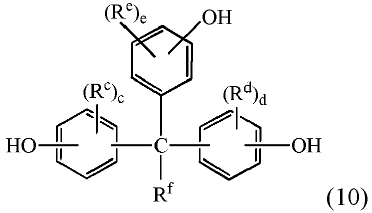 wherein
R^{c}, R^{d}, and R^{e} each independently comprise a hydrogen, halogen, C₁₋₁₂ alkoxy, or C₁₋₁₂ alkyl,
R^{f} is hydrogen or C₁₋₃ alkyl, and
c, d, and e each independently comprise integers of 0 to 4;
or a combination thereof.

5. The poly(arylene ether) copolymer of any one of Claims 2-4, wherein the at least one of Z¹, Z², or a combination thereof of the first monohydric phenol comprises
a substituted or unsubstituted C₁₋₆alkyl, C₂₋₆alkenyl, C₂₋₆alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆₋₁₂aryl, or (C₆₋₁₂aryl)C₁₋₃alkyl;
preferably a substituted or unsubstituted C₁₋₃alkyl, C₂₋₄alkenyl, C₂₋₄alkynyl, C₃₋₁₂cycloalkyl, C₃₋₁₂cycloalkenyl, C₁₋₃alkyl(C₃₋₁₂cycloalkyl), C₁₋₃alkyl(C₃₋₁₂cycloalkenyl), C₆aryl, or (C₆aryl)C₁₋₃alkyl;
more preferably methyl, ethyl, allyl, a substituted or unsubstituted cyclohexyl, phenyl, - CH₂-adamantyl, -(CH₂)₂-bicyclo[2.2.1]heptenyl, C₁₋₃alkyl(C₃₋₁₂cycloalkenyl) different from the -(CH₂)₂-bicyclo[2.2.1]heptenyl,
wherein each occurrence of Z¹ are not simultaneously methyl, and each occurrence of Z² are not simultaneously methyl.

6. The poly(arylene ether) copolymer of any one of Claims 2-5, wherein
one occurrence of Z¹ of the first monohydric phenol is methyl; and
the other occurrence of Z¹ of the first monohydric phenol comprises methyl, allyl, substituted or unsubstituted cyclohexyl, phenyl, -CH₂-adamantyl, -(CH₂)₂-bicyclo[2.2.1]heptenyl, or C₁₋₃alkyl(C₃₋₁₂cycloalkenyl) different from the substituted or unsubstituted -(CH₂)₂-bicyclo[2.2.1]heptenyl.

7. The poly(arylene ether) copolymer of any one of the preceding claims, wherein the trisphenol is present and comprises formula (10a) 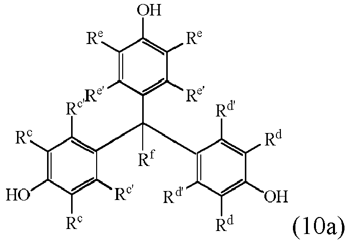 wherein
R^{c}, R^{d}, and R^{e} each independently comprise a halogen, C₁₋₁₂ alkoxy, or C₁₋₁₂ alkyl;
R^{c'}, R^{d'}, and R^{e'} each independently comprise a hydrogen, halogen, C₁₋₁₂ alkoxy, or C₁₋₁₂ alkyl, and
R^{f} is hydrogen or C₁₋₃ alkyl.

8. The poly(arylene ether) copolymer of any one of the preceding claims, wherein at least one terminal functional group is present and comprises (meth)acrylate, styrene, -CH₂-(C₆H₄)-CH=CH₂, allyl, cyanate ester, glycidyl ether, anhydride, aniline, maleimide, an activated ester, or a combination thereof.

9. A method of making the poly(arylene ether) copolymer of Claim 7 comprising oxidatively polymerizing the first monohydric phenol, the second monohydric phenol, and a
trisphenol precursor having the structure 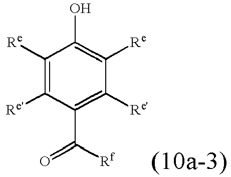 wherein
each occurrence of R^{e} independently comprises halogen, C₁₋₁₂ alkoxy, or C₁₋₁₂ alkyl;
each occurrence of R^{e'} independently comprises a hydrogen, halogen, C₁₋₁₂ alkoxy, or C₁₋₁₂ alkyl, and
R^{f} is hydrogen or C₁₋₃ alkyl; and
optionally, the novolac, the dicyclopentadiene phenol novolac, or a trisphenol different from the trisphenol of Claim 7 to provide the poly(arylene ether) copolymer having terminal hydroxyl groups; and
optionally, reacting the terminal hydroxyl groups of the poly(arylene ether) copolymer with a compound to provide the poly(arylene ether) copolymer having at least one terminal functional group.

10. A method of making the poly(arylene ether) copolymer of Claims 1-8 comprising
oxidatively polymerizing the first monohydric phenol, the second monohydric phenol; and the multifunctional phenol or polyphenol to provide the poly(arylene ether) copolymer having terminal hydroxyl groups; and
optionally, reacting the terminal hydroxyl groups of the poly(arylene ether) copolymer with a compound to provide the poly(arylene ether) copolymer having at least one terminal functional group.

11. A curable composition comprising
the poly(arylene ether) copolymer of any one of claims 1 to 8; and
a curing promoter comprising an amine, a dicyandiamide, a polyamide, an amidoamine, a Mannich base, an anhydride, a phenol-formaldehyde resin, a carboxylic acid functional polyester, a polysulfide, a polymercaptan, an isocyanate, a cyanate ester, or a combination thereof.

12. The curable composition of Claim 10 or Claim 11, further comprising
an auxiliary curable resin comprising an epoxy resin, a cyanate ester resin, a maleimide resin, a benzoxazine resin, a vinylbenzyl ether resin, an arylcyclobutene resin, a perfluorovinyl ether resin, copolymers or polymers with curable vinyl functionality, or a combination thereof;
a curable unsaturated monomer comprising a monofunctional styrenic compound, a monofunctional (meth)acrylic compound, a polyfunctional allylic compound, a polyfunctional (meth)acrylate, a polyfunctional (meth)acrylamide, a polyfunctional styrenic compound, or a combination thereof;
or a combination thereof.

13. A thermoset composition comprising the curable composition of any one of Claims 10 to 12, wherein the thermoset composition has a glass transition temperature of greater than or equal to 180 °C, preferably greater than or equal to 190 °C, more preferably greater than or equal to 200 °C, as determined according to differential scanning calorimetry as per ASTM D3418 with a 20°C/min heating rate.

14. An article comprising the thermoset composition of Claim 13, wherein the article is a composite, a foam, a fiber, a layer, a coating, an encapsulant, an adhesive, a sealant, a molded component, a prepreg, a casing, a laminate, a metal clad laminate, an electronic composite, a structural composite, or a combination thereof.

15. A method for the manufacture of a thermoset composition, the method comprising curing the curable composition of any one of Claims 10 to 12, preferably at a temperature of 50 to 250 °C.
